# EUROPEAN PATENT APPLICATION

(11) **EP 4 583 250 A1**
(43) Date of publication of application: **09.07.2025**
(21) Application number: 24853008.1
(22) Date of filing: 22.08.2024
(51) Int. Cl.: H01M 10/613, H01M 10/643, H01M 10/6551, H01M 10/6555, H01M 10/6557

(54) **BATTERY MODULE, COOLING PLATE, AND BATTERY PACK**

(30) Priority: 23.11.2023 CN 202323183521 U
(71) Applicant: Eve Energy Co. Ltd., Huizhou, Guangdong 516000 (CN)
(72) Inventor: LAI, Libing, Guangdong 516006 (CN); ZHOU, Xiao, Guangdong 516006 (CN); ZHAO, Yuhang, Guangdong 516006 (CN); YAN, Shiwei, Guangdong 516006 (CN)
(74) Representative: Berggren Oy
(86) International application number: PCT/CN2024/113873
(87) International publication number: WO 2025/107767

(57) **Abstract**

The present disclosure provides a battery module including a plurality of cells, a cooling plate, and a battery pack. The battery module includes a plurality of cell groups; and a plurality of cooling plates disposed between two adjacent cell groups. Each of the plurality of cooling plates further includes a plurality of first partition walls and a plurality of second partition walls. The fluid channel is divided into a plurality of first flow channels through the plurality of first partition walls. The first flow channel is divided into at least two second flow channels through the second partition wall.

## Description

The present disclosure claims priority to Chinese Patent Application No. 202323183521.9, filed on November 23, 2024, the disclosure of which are incorporated herein by reference in their entirety.

### TECHNICAL FIELD

The present disclosure relates to the technical field of batteries, and in particular, to a battery module, a cooling plate, and a battery pack.

### BACKGROUND

Cylindrical battery modules usually need to dissipate heat by means of serpentine cooling plates.

### SUMMARY

In the related arts, mounting height allowed by a serpentine cooling plate is usually less than that of a cylindrical battery. In this way, in the height direction of a cylindrical cell, the side of the cell cannot be completely covered by the cooling plate, thereby affecting the cooling effect of the serpentine cooling plate on the cell. Furthermore, the heat exchange effect of the serpentine cooling plate is hindered due to a limited heat exchange effect between the cooling liquid contained in its inner cavity and its inner wall.

According to a first aspect, embodiments of the present disclosure provide a battery module, which includes:
a plurality of cell groups disposed in parallel, each of the plurality of cell groups includes a plurality of cells, and the plurality of cells are disposed side by side in a first direction; and
a plurality of cooling plates disposed at intervals in a second direction, the second direction is perpendicular to the first direction, the plurality of cooling plates are disposed between two adjacent ones of the plurality of cell groups;
each of the plurality of cooling plates is provided with a fluid channel extending from one side thereof to another side thereof, each of the plurality of cooling plates further includes a plurality of first partition walls and a plurality of second partition walls, each of the plurality of second partition walls is connected between two adjacent ones of the plurality of first partition walls, the fluid channel is divided into a plurality of first flow channels through the plurality of first partition walls, at least one of the plurality of second partition walls is disposed in each of the first flow channels, and each of the plurality of first flow channels is divided into at least two second flow channels through the at least one of the plurality of second partition walls.

In a second aspect, embodiments of the present disclosure provide a cooling plate. The cooling plate is used for a battery module. The cooling plate includes a fluid channel extending from one side thereof to another side thereof, the cooling plate further includes a plurality of first partition walls and a plurality of second partition walls, each of the plurality of second partition walls is connected between two adjacent ones of the plurality of first partition walls, the fluid channel is divided into a plurality of first flow channels through the plurality of first partition walls, at least one of the plurality of second partition walls is disposed in each of the first flow channels, and each of the plurality of first flow channels is divided into at least two second flow channels through the at least one of the plurality of second partition walls.

According to a third aspect, embodiments of the present disclosure provide a battery pack including a plurality of battery modules, wherein the plurality of battery modules includes the above-mentioned battery modules.

### BENEFICIAL EFFECTS

According to the battery module provided in the present disclosure, a plurality of first partition walls and a plurality of second partition walls are disposed inside a cooling plate, wherein the fluid channel is divided into a plurality of first flow channels through the plurality of first partition walls, at least one second partition wall is disposed in each of the first flow channels, and each of the plurality of first flow channels is divided into at least two second flow channels through the at least one of the plurality of second partition walls, so that the fluid channel of the cooling plate is divided into a plurality of microchannel structures. In this way, cooling liquid inside each microchannel can be sufficiently exchanged with the first partition walls and the second partition walls, thereby effectively improving the cooling effect of the cooling plate.

According to the cooling plate provided in the present disclosure, a plurality of first partition walls and a plurality of second partition walls are disposed inside a cooling plate, wherein the fluid channel is divided into a plurality of first flow channels through the plurality of first partition walls, at least one second partition wall is disposed in each of the first flow channels, and each of the plurality of first flow channels is divided into at least two second flow channels through the at least one of the plurality of second partition walls, so that the fluid channel of the cooling plate is divided into a plurality of microchannel structures. In this way, cooling liquid inside each microchannel can be sufficiently exchanged with the first partition walls and the second partition walls, thereby effectively improving the cooling effect of the cooling plate.

The battery pack provided in the present disclosure is designed based on the above-mentioned battery modules, and the advantageous effects thereof can be found in the beneficial effects of the above battery module mentioned above, which are not describedin detail here.

### BRIEF DESCRIPTION OF THE DRAWINGS

FIG. 1 is a schematic structural diagram of a battery module according to embodiments of the present disclosure;
FIG. 2 is a perspective view of a cooling plate according to embodiments of the present disclosure;
FIG. 3 is a partial enlarged view of FIG. 2;
FIG. 4 is a partial enlarged view of FIG. 3;
FIG. 5 is a cross-sectional view of a cooling plate according to embodiments of the present disclosure; and
FIG. 6 is a partial enlarged view of FIG. 5.

### List of reference signs:

100. battery module; 10. cell; 11. cell group; 20. cooling plate; 201, first side; 202, second side; 21. first sidewall; 22. second sidewall; 222. second opening; 23. first inner wall; 24. second inner wall; 30. partition wall; 31. first partition wall; 32. second partition wall; 321. first wall; 322, second wall; 40. fluid channel; 41. first flow channel; 42. second flow channel; 43. inlet end; 44. outlet end.

### DETAILED DESCRIPTION

In the present disclosure, unless otherwise stated, orientation words such as "up" and "down" generally refers to "up" and "down" in the actual use or working state of a device, and specifically refers to the drawing direction in the drawings; while "inside" and "outside" refer to outline of a device.

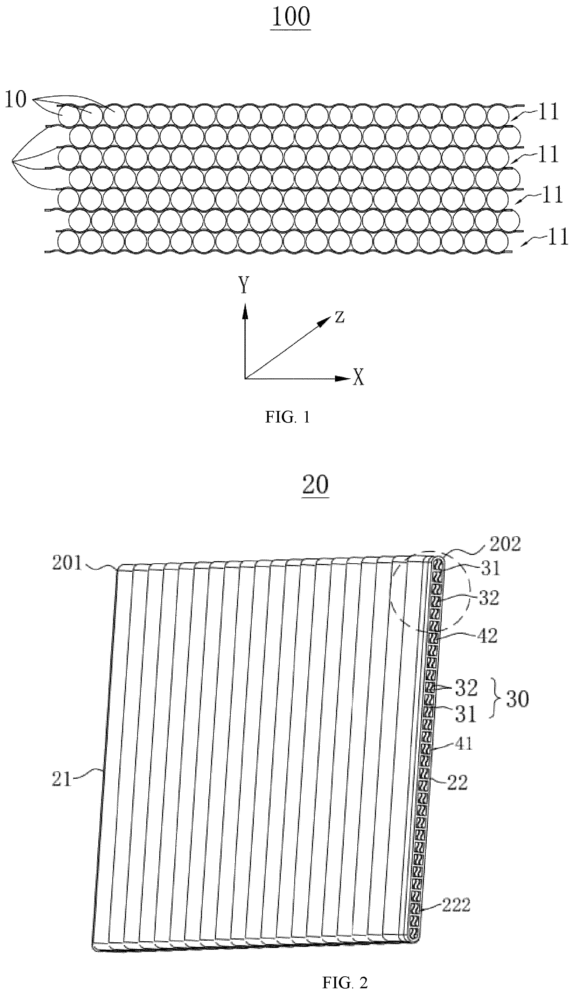

Embodiments of the present disclosure provide a battery module 100. As shown in FIG. 1, which is a schematic structural diagram of the battery module 100. The battery module 100 includes a plurality of cells 10, a frame (not shown) for fixing the plurality of cells 10, and a plurality of cooling plates 20 for cooling the plurality of cells 10. The plurality of cells 10 are disposed in a matrix, that is, the plurality of cells 10 are disposed side by side in a first direction to form a plurality of cell groups 11, the plurality of cell groups 11 are disposed at intervals in a second direction Y, adjacent two cell groups 11 are kept at uniform intervals, and the plurality of cooling plates 20 are disposed between the two adjacent cell groups 11.

Continuing to refer to FIG. 2, the cooling plate 20 has a length extending in the first direction X and a height extending in the third direction Z. The height of the cooling plate 20 is configured to be substantially the same as the height of a single cell 10. In a case that the battery module 100 is provided with n cells 10 arranged in the first direction, the length of the cooling plate 20 is configured to be approximately the same as a sum of the diameters of the n cells 10. A roughly cylindrical cell 10 is taken as an example. The cell 10 includes two semi-circular outer sides, one of which is as close as possible to the outer surface of the upper cooling plate 20, and the other of which is as close as possible to the outer surface of the lower cooling plate 20.

In some embodiments, the cooling plate 20 extends in a wave shape along in a first direction X. The cooling plate 20 further includes opposite two outer surfaces, wherein each outer surface includes a plurality of semi-circular grooves, each semi-circular groove of the cooling plate 20 is used for accommodating a part of a single cell 10. The cooling plate 20 with the above structure is beneficial to increase the contact area of the cooling plate 20 and the cell 10, thereby increasing the cooling efficiency of the cooling plate 20.

The cooling plate 20 has a first side 201 and second side 202 that are opposite to each other. The first side 201 includes a first sidewall 21. The second side 202 includes a second sidewall 22. Both the first side wall 21 and the second side wall 22 extend longitudinally in a third direction Z. The first sidewall 21 includes a plurality of first openings (not shown). The second sidewall 22 includes a plurality of second openings 222. The cross-sectional area of the first openings and the cross-sectional area of the second openings 222 are configured to be substantially the same. In a case that the first openings are configured as inlets of a cooling liquid, the second openings 222 are configured as outlets of a cooling liquid, vice versa. The cooling plate 20 further includes a first inner wall 23 and a second inner wall 24 spaced apart from each other. A hollow inner cavity is formed between the first inner wall 23 and the second inner wall 24, and the hollow inner cavity communicates with the first openings and the second openings 222. The first openings and the second openings 222 and the hollow inner cavity together define a fluid channel 40. In some embodiments, the length of the fluid channel 40 extending in the first direction X is equal to the length of the cooling plate 20 extending in the first direction.

In the embodiments of the present disclosure, the structure of the fluid channel inside the cooling plate 20 is optimized, so that sufficient heat exchange can be performed between the cooling liquid and the inner wall of the cooling plate 20. It can be understood that during operation of the plurality of cells 10, the heat generated by the plurality of cells 10 is transferred to the wall of the cooling plate 20 through the heat transfer between the solids. The heat absorbed by the cells 10 is exchanged with the cooling liquid inside the fluid channel 40. In a case that the flow rate of the cooling liquid inside the fluid channel 40 is kept constant, the larger the surface area of the cooling liquid contacting the inner wall of the cooling plate 20, the greater the cooling power of the cooling plate 20 per unit time. Therefore, when the space available for optimizing the external structure of the cooling plate 20 is limited, changing in the fluid channel structure of the cooling plate 20 can improve the cooling effect.

Continuing to refer to FIGs. 2 to 6, a plurality of partition walls 30 are disposed inside the fluid channel 40 of the cooling plate 20. The plurality of partition walls 30 include a plurality of first partition walls 31 and a plurality of second partition walls 32 that are staggered. The fluid channel 40 is separated by the plurality of first partition walls 31 and the plurality of second partition walls 32 respectively in different directions. The fluid channel 40 is divided into a plurality of first flow channels 41 through the plurality of first partition walls 31. At least one second partition wall 32 is disposed in each of the plurality of first flow channels 41. Each of the plurality of first flow channels 41 is divided into at least two second flow channels 42 through the at second partition wall.

In some embodiments, the wall thickness and the extension direction of all the first partition walls 31 are the same, so that the plurality of first flow channels 41 formed by the first partition walls 31 have the same width and height. Similarly, the wall thickness and the extension direction of the plurality of second partition walls 32 are substantially the same, so that the plurality of second flow channels 42 formed by the second partition walls 32 have the same width and height.

By providing a plurality of first partition walls 31 and a plurality of second partition walls 32 inside the fluid channel 40, the fluid channel 40 is divided into a plurality of first flow channels 41 through the plurality of first partition walls 31, so that the cooling liquid inside the first flow channel 41 can be in contact with the first inner wall 23, the second inner wall 24 and the plurality of first partition walls 31. Further, at least one second partition wall 32 is disposed in each of the first flow channels 41, and two ends of each second partition wall 32 are respectively connected to the two adjacent first partition walls 31. The first flow channel 41 is divided into at least two second flow channels 42 through the second partition walls 32, so that the cooling liquid inside the second flow channel 4 can be in contact with the first inner wall 23, the second inner wall 24, the plurality of first partition walls 31, and the plurality of second partition walls 32. In this way, the cooling liquid inside the second flow channel 42 can fully exchange heat with the inner walls of the cooling plate 20.

It can be understood that the more the number of the first partition walls 31 and the second partition walls 32 disposed inside the cooling plate 20, the larger the contact area between the cooling liquid in the micro second flow channel 42 formed by the first partition walls 31 and the second partition walls 32 and the inner wall of the cooling plate 20. However, at the same time, the first partition walls 31 and the second partition walls 32 themselves need to occupy a certain volume of the fluid channel 40. Therefore, the more the first partition walls 31 and the second partition walls 32 are disposed, the smaller the capacity of the cooling liquid that can be accommodated in the fluid channel 40. Therefore it is necessary to provide a reasonable number of the first partition walls 31 and the second partition walls 32. In embodiments of the present disclosure, one, two or three second partition walls 32 may be disposed inside thefirst flow channel 41 formed by the two adjacent first partition walls 31.

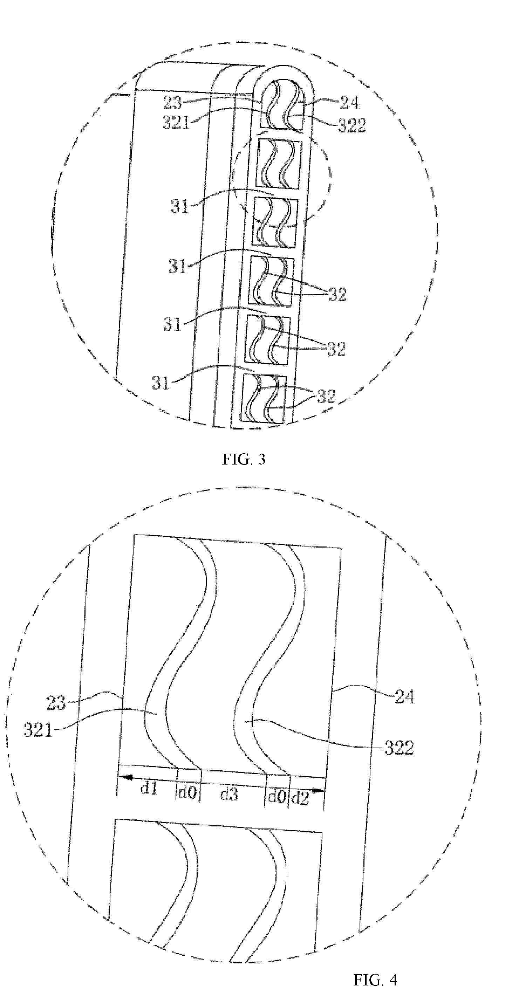

Continuing to refer to FIGs. 2 and 3, one end of each first partition wall 31 is connected to the first inner wall 23, the other end of each first partition wall 31 is connected to the second inner wall 24. Further, the first partition wall 31 is configured to be perpendicular to the first inner wall 23 and the second inner wall 24. Compared with the configuration that an acute angle is formed between the first partition wall 31 and first inner wall 23 or an acute angle is formed between the first partition wall 31 and second inner wall 24, the configuration that the first partition wall 31 is perpendicular to the first inner wall 23 and the second inner wall 24 is beneficial to improving the internal structural strength of the cooling plate 20 and preventing the first partition wall 31 from deforming.

The number of the first partition walls 31 is mainly determined by the height of the cooling plate 20. The higher the height of the cooling plate 20, the more the number of the first partition walls 31 that can be disposed on the cooling plate 20 correspondingly. The height of the cooling plate 20 is mainly adjusted according to the height of the cell 10. The height of cells 10 of different specifications are different, so the number of the first partition walls 31 is not limited in the embodiments of the present disclosure.

Continuing to refer to FIGs. 3 and 4, two second partition walls 32 are disposed inside each first flow channel 41, and the two second partition walls 32 are disposed substantially in parallel. Each first flow channel 41 is divided into three second flow channels 42 through two second partition walls 32. In some embodiments, the three second flow channels 42 have approximately the same width and height. Specifically, two second partition walls 32 are disposed inside each first flow channel 41 at intervals, and the two second partition walls 32 are a first wall 321 and a second wall 322, respectively. The first wall 321 is disposed close to the first inner wall 23, the second wall 322 is disposed close to the second inner wall 24. A space d1 is formed between the first wall 321 and the first inner wall 23. A space d2 is formed between the second wall 322 and the second inner wall 24. In an embodiment, d1 is equal to d2. A space d3 is formed between the first wall 321 and the second wall 322, d3 is equal to d1, or d3 is equal to d2.

Since a plurality of first partition walls 31 are disposed at uniform intervals along the height direction Z of the cell 10, the amount of cooling liquid contained in the plurality o first flow channels 41 formed by the first partition walls 31 at intervals is substantially the same. In a case that each first flow channel 41 is divided into three second flow channels 42 through two second partition walls 32, and in a case that d1 is equal to d2 and d3, the amount of cooling liquid that can be contained in the three micro second flow channels 42 is also substantially the same, so that the heat of the cell 10 absorbed by the walls of the cooling plate 20 can fully exchange heat with the cooling liquid inside the three micro second flow channels 42 in the same height direction of the cell 10. The wall of the cooling plate 20 includes at least one first partition wall 31 and at least two second partition walls 32. In a case that the amount of cooling liquid contained in each micro second flow channel 42 is the same, the contact area between the wall of the cooling plate 20 and the cooling liquid is the same, and the cooling effect of the cooling liquid in each micro second flow channel 42 is the same, thereby ensuring that the cooling effects of the plurality of second flow channels 42 of the cooling plate 20 are the same. In this way, while improving the cooling efficiency of the cooling plate 20, the cooling effects of the plurality of second flow channels 42 of the cooling plate 20 are also the same, thereby improving the uniformity of the cooling effect at various parts of the cooling plate 20.

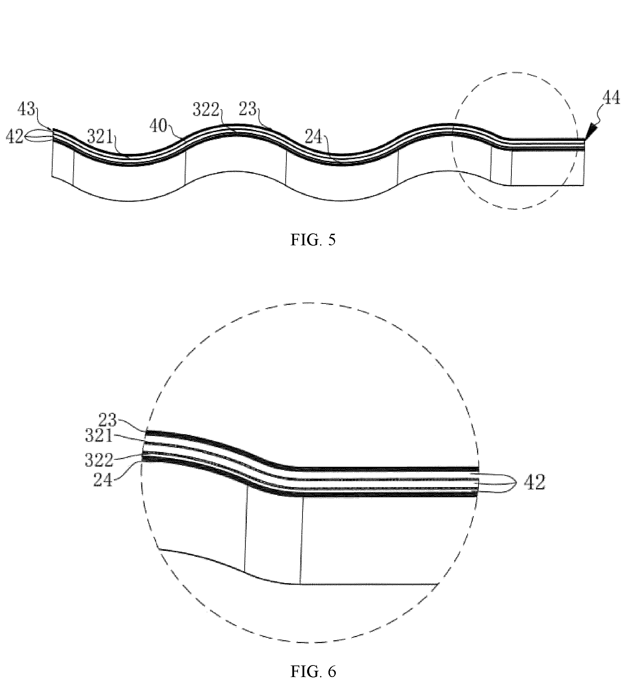

Continuing to refer to FIGs. 5 and 6, in a case that the cell 10 is cylindrical, the cooling plate 20 is generally configured as a serpentine plate, that is, the first inner wall 23 and the second inner wall 24 have surfaces extending in waves. In some embodiments, the second partition walls 32 extend in a wave shape along the height direction Z of the cell 10, and the flowing liquid on the second partition walls 32 is nearly laminar along the flow direction of the cooling liquid, which is beneficial to improving the heat transfer efficiency between the cooling liquid and the second partition walls 32. The two second partition walls 32 inside each first flow channel 41 are disposed substantially in parallel. The curvature of each second partition wall 32 at each point remains approximately the same as the curvature of the first inner wall 23 or the curvature of the second inner wall 24, so that the flow rate of the cooling liquid inside each micro second flow channel 42 remains approximately the same, thereby improving the uniformity of the heat exchange effect of the cooling plate 20.

In the embodiments provided in the present disclosure, a plurality of first partition walls 31 and a plurality of second partition walls 32 are disposed inside the cooling plate 20, and the plurality of first partition walls 31 and the plurality of second partition walls 32 are staggered. The plurality of first partition walls 31 are uniformly distributed in a spaced manner along a height direction Z of the plurality of cells 10. The extension direction of each first partition wall 31 is substantially parallel to the second direction Y. The second partition walls 32 are disposed between two adjacent first partition walls 31. The arrangement of the first partition walls 31 and the second partition walls 32 can obviously improve the structural strength of the cooling plate 20 itself. In some embodiments, the thickness of the first partition walls 31 is greater than the thickness of the second partition walls 32, which is beneficial to prevent the first partition walls 31 from being deformed, thus affecting the uneven local cooling effect of the cooling plate 20.

In some embodiments, the length of the second partition wall 32 extending in the first direction X is substantially the same as the length of the cooling plate 20 extending in the first direction X, thereby effectively improving the tensile strength and yield strength of the cooling plate 20 and prolonging the service life of the cooling plate 20.

In some embodiments, the second partition wall 32 has a suitable wall thickness d0. The suitable wall thickness d0 is not greater than 0.3 mm, and the wall thickness d0 is not less than 0.5 mm. In a case that the wall thickness d0 of the second partition wall 32 is too thin, the strength of the second partition wall 32 is insufficient and the second partition wall 32 is easy to deform, especially the second partition wall 32 needs to withstand the impact force of the fluid for a long time. In a case that the wall thickness d0 of the second partition wall 32 is too thick, burrs and flash are easily formed during the molding of the second partition wall 32 through the extrusion die, thereby affecting the uneven size of the formed second flow channel 42. In a case that the wall thickness d0 of the second partition wall 32 is too thick, the number of the second partition walls 32 that can be disposed inside each of first flow channel 41 will be relatively reduced, thereby affecting the number of the formed second flow channels 42. It can understood that the wall thickness d0 of the second partition wall 32 may be selected from any range between 0.3 mm and 0.5 mm, or the wall thickness d0 of the second partition wall 32 may be selected from any value between 0.3 mm and 0.5 mm, which are not listed one by one here in the embodiments of the present disclosure.

In some embodiments, the fluid channel 40 includes inlet ends 43 and outlet ends 44. The inlet ends 43 are configured to allow a cooling liquid to enter. The outlet ends 44 are configured to allow a circulating liquid to flow out. A flow rate of the cooling liquid entering the inlet ends 43 is less than a flow rate of the circulating liquid flowing out of the outlet ends 44. The temperature of the cooling liquid entering through the inlet ends 43 is relatively low, and the temperature of the cooling liquid flowing out through the outlet ends 44 is relatively high. The cooling liquid at the inlet ends 43 is controlled to enter the interior of the cooling plate 20 at a lower rate, so that the cooling liquid at a lower temperature has a sufficient residence time inside the cooling plate 20. Further, and the circulating liquid with a higher temperature is controlled to flow out of the cooling plate 20 quickly through the outlet ends 44, thereby reducing the residence time of the circulating liquid in the cooling plate 20, which is beneficial to improving the heat exchange effect of the cooling plate 20.

Embodiments of the present disclosure provide a battery pack including a body and a plurality of battery modules 100 disposed inside the body. The battery modules 100 may be the battery modules 100 provided in any one of the above-mentioned embodiments. The plurality of battery modules 100 may be connected in series or in parallel. Each of the battery modules 100 in the battery pack adopts the cooling plate 20, so that the heat dissipation efficiency of the battery modules 100 can be improved, thereby improving the safety performance of the battery pack and providing the service life of the battery pack.

## Claims

1. A battery module (100) comprising
a plurality of cell groups (11) disposed in parallel, each of the plurality of cell groups (11) comprising a plurality of cells (10), and the plurality of cells (10) being disposed side by side in a first direction; and
a plurality of cooling plates (20) disposed at intervals in a second direction, the second direction being perpendicular to the first direction, the plurality of cooling plates (20) being disposed between two adjacent ones of the plurality of cell groups (11);
wherein each of the plurality of cooling plates (20) is provided with a fluid channel (40) extending from a first side (201) thereof to a second side (202) thereof, each of the plurality of cooling plates (20) further comprises a plurality of first partition walls (31) and a plurality of second partition walls (32), each of the plurality of second partition walls (32) is connected between two adjacent ones of the plurality of first partition walls (31), the fluid channel (40) is divided into a plurality of first flow channels (41) through the plurality of first partition walls (31), at least one of the plurality of second partition walls (32) is disposed in each of the first flow channels (41), and each of the plurality of first flow channels (41) is divided into at least two second flow channels (42) through the at least one of the plurality of second partition walls (32).

2. The battery module (100) according to claim 1, wherein two ones of the plurality of second partition walls (32) are disposed in each of the plurality of first flow channels (41), and the two ones of the plurality of second partition walls (32) are disposed in parallel.

3. The battery module (100) according to claim 1, wherein the plurality of second partition walls (32) extend in a wavy shape along a height direction of the plurality of cells.

4. The battery module (100) according to claim 2, wherein each of the plurality of cooling plates (20) comprises a first inner wall (23) and a second inner wall (24) defining the fluid channel (40), each of the plurality of second partition walls (32) comprises a first wall (321) and a second wall (322) spaced apart from each other, the first wall (321) is disposed close to the first inner wall (23), the second wall (322) is disposed close to the second inner wall (24), a space d1 is formed between the first wall (321) and the first inner wall (23), a space d2 is formed between the second wall (322) and the second inner wall (24), and d1 is equal to d2.

5. The battery module (100) according to claim 4, wherein one end of each of the plurality of first partition walls (31) is connected to the first inner wall (23), another end of each of the plurality of first partition walls (31) is connected to the second inner wall (24), and each of the plurality of first partition walls (31) is configured to be perpendicular to the first inner wall (23) or the second inner wall (24).

6. The battery module (100) according to claim 1, wherein a length of each of the plurality of second partition walls (32) extending in the first direction is substantially same as a length of each of the plurality of cooling plates (20) extending in the first direction.

7. The battery module (100) according to any one of claims 1 to 6, wherein a wall thickness of each of the plurality of second partition walls (32) is less than a wall thickness of each of the plurality of first partition walls (31).

8. The battery module (100) according to any one of claims 1 to 6, wherein the wall thickness of each of the plurality of second partition walls (32) is not greater than 0.3 mm, and the wall thickness of each of the plurality of second partition walls (32) is not less than 0.5 mm.

9. The battery module (100) according to claim 1, wherein the plurality of first partition walls (31) are uniformly distributed in a spaced manner along a height direction of the plurality of cells (10), and the plurality of first partition walls (31) extend substantially in the second direction.

10. The battery module (100) according to any one of claims 1 to 6, wherein the fluid channel (40) comprises an inlet end (43) and an outlet end (44), the inlet end (43) is configured to allow a cooling liquid to enter, the outlet end (44) is configured to allow a circulating liquid to flow out, and a flow rate of the cooling liquid entering the inlet end (43) is less than a flow rate of the circulating liquid flowing out of the outlet end (44).

11. A cooling plate (20) used for a battery module (100), wherein the cooling plate (20) comprises a fluid channel (40) extending from a first side (201) thereof to a second side (202) thereof, the cooling plate (20) further comprises a plurality of first partition walls (31) and a plurality of second partition walls (32), each of the plurality of second partition walls (32) is connected between two adjacent ones of the plurality of first partition walls (31), the fluid channel (40) is divided into a plurality of first flow channels (41) through the plurality of first partition walls (31), at least one of the plurality of second partition walls (32) is disposed in each of the first flow channels (41), and each of the plurality of first flow channels (41) is divided into at least two second flow channels (42) through the at least one of the plurality of second partition walls (32).

12. A battery pack including a box and a plurality of battery modules (100) disposed inside the box, wherein the plurality of battery modules (100) comprise the battery module according to any one of claims 1 to 10.
